# EUROPÄISCHE PATENTSCHRIFT

(11) **EP 0 708 961 B1**
(45) Veröffentlichungstag und Bekanntmachung des Hinweises auf die Patenterteilung: **04.03.1998**
(21) Anmeldenummer: 94924218.4
(22) Anmeldetag: 30.06.1994
(51) Int. Cl.: G11B 7/09, G11B 21/10

(54) **G-FAKTOR-ABGLEICH**
G-FACTOR ALIGNMENT
EGALISATION DU FACTEUR G

(30) Priorität: 10.07.1993 DE 4323067
(43) Veröffentlichungstag der Anmeldung: 01.05.1996
(73) Patentinhaber: DEUTSCHE THOMSON-BRANDT GMBH, 78048 Villingen-Schwenningen (DE)
(72) Erfinder: ZUCKER, Friedhelm, D-78052 Villingen-Schwenningen (DE); BÜCHLER, Christian, D-78052 Villingen-Schwenningen (DE)
(86) Internationale Anmeldenummer: EP9402146
(87) Internationale Veröffentlichungsnummer: WO9502244

(56) Entgegenhaltungen:
- EP-A- 0 274 031
- EP-A- 0 478 314
- WO-A-90/08381
- WO-A-91/08568
- DE-C- 4 029 040
- Patent Abstracts of Japan, Band 14, Nr 465(P-1114); & JP,A,02185723 (CANON INC), 1990-07-20

## Beschreibung

Die Erfindung betrifft Verfahren und Anordnungen zum G-Faktor-Abgleich bzw. zum Einstellen einer Steuersignale bzw. ein Spurfehlersignal bei Abweichungen des Abtaststrahls von der Informationsspur eines Aufzeichnungsträgers bereitstellenden Einrichtung in Regelkreisen zur Spurführung optischer Abtasteinrichtungen, die zur Spurführung der Abtasteinrichtung beispielsweise das bekannte Transversal-Push-Pull- oder Differential-Push-Pull-Verfahren verwenden. Mit derartigen Abtastvorrichtungen sind beispielsweise CD-Spieler, Videoplattenspieler, Draw-Disc-Spieler und magneto-optische Aufzeichnungs- und Wiedergabegeräte ausgestattet.

Als Push-Pull wird allgemein eine Methode zum Erzeugen eines Spurfehlersignals für den Spurregelkreis bei radialer bzw. seitlicher Abweichung des Abtaststrahls von der Informationsspur des Aufzeichnungsträgers bezeichnet, wobei das Push-Pull-Signal das Differenzsignal eines mindestens zweigeteilten Photodetektors ist, das ein Führen der Abtasteinrichtung bzw. des Abtaststrahls auf der Spur des Aufzeichnungsträgers ermöglicht. Das vom optischen Aufzeichnungsträger reflektierte und mit dem Photodetektor detektierte Licht weist eine von der Art des Auftreffens des Abtaststrahls auf einer Informationsspur bzw. von der Spurpositionierung abhängige Intensitätsverteilung auf, wird in elektrische Signale umgewandelt und als Führungsgröße bzw. Push-Pull-Signal im Spurregelkreis verwendet, der den Abtaststrahl auf der Informationsspur hält. Hierzu steuert ein Spurregelverstärker bzw. Track-Regler eine Abtasteinrichtung bzw. einen sogenannten Pickup. Der Pickup enthält einen Laser, der den Abtaststrahl erzeugt, eine als Aktuator bezeichnete bewegliche Halterung einer Objektivlinse zur Feinpositionierung und Fokussierung des Abtaststrahls, die mit einer Servoeinrichtung gesteuert wird, einen Strahlteiler zum Trennen von Sende- und Empfangsrichtung des Lichtes und eine Photodetektor zum Auswerten des vom Aufzeichnungsträger reflektierten Lichts. vgl. Electronic Components & Applications, Vol. 6, No. 4, 1984, S.209-215. Um den relativ großen Spurbereich eines Aufzeichnungsträgers abtasten zu können, ist der Pickup in der Regel auf einem senkrecht zur Informationsspur verfahrbaren Grobantrieb angeordnet, der mit der Servoeinrichtung den sogenannten Radialantrieb zur Spurführung der Abtasteinrichtung bildet. Die auch als Feinantrieb bezeichnete Servoeinrichtung ist dabei insbesondere vorgesehen, um schellen Spurverlagerungen durch Plattenschlag oder Exzentrizitäten des Aufzeichnungsträgers folgen zu können. Infolge Plattenschlag oder Exzentrizität des Aufzeichnungsträgers ist die Objektivlinse über dem Pickup in ständiger Bewegung, um der Informationspur des Aufzeichnungsträgers zu folgen. Die von der Stellung der Objektivlinse abhängige optischen Achse der Abtasteinrichtung verändert ihre Lage, wandert über den Photodetektor und das vom Aufzeichnungsträger reflektierte Licht erreicht den Photodetektor in Abhängigkeit von der aktuellen Stellung des Aktuators. Dies führt dazu, daß trotz idealer Positionierung des Abtaststrahls auf der Informationsspur des Aufzeichnungsträgers infolge Schrägstellung und Bewegung des Aktuators ein Spurfehler- bzw. Push-Pull-Signal erzeugt und eine Abweichung von der Informationsspur vorgetäuscht wird. Weiterhin kann das Push-Pull-Signal Spurabweichungen vortäuschen, die von der mechanischen Stabilität bzw. Instabilität des Pickups und seiner Justage ausgehen. Die Photodetektoren sind beispielsweise mit einem Kleber auf dem Pickup befestigt und schwimmen in Abhängigkeit von Temperatur und Luftfeuchtigkeit im Kleber, wodurch Bewegungen verursacht werden. Mit dem Push-Pull-Signal kann somit nicht unterschieden werden, ob das Spurfehlersignal tatsächlich auf eine Spurabweichung, eine Schrägstellung des Aktuators, Instabilitäten des Pickups oder auch auf Eigenschaften des Aufzeichnungsträgers zurückzuführen ist.
Um diesen Nachteil zu vermeiden, sind bereits das sogenannte Tranversal-Push-Pull und das Differential-Push-Pull bekannt, vgl. WO 90 08 381 und Kiyoshi Ohsato, Differential Push-Pull method, Opticial Memory Symposium Japan, 18.02.1986. Beim Transversal-Push-Pull bzw. TPP, einem Einstrahlabtastverfahren, wird ein aus vier Quadranten bestehender Photodetektor verwendet, zu dem der Aktuator derart angeordnet ist, daß sich der reflektierte Lichtstahl bei Spurabweichung nicht parallel zu einer Trennungslinie des Vierquadrantenphotodetektors bewegt.
Dadurch werden bei einer Auslenkung Signalkomponenten in zwei senkrecht zueinander stehenden Richtungen verfügbar, die es mit einem Korrekturfaktor, dem sogenannten G-Faktor, ermöglichen, ein ausschließlich auf Spurabweichungen bzw. Spurfehler zurückzuführendes Spurfehlersignal, das auch als Trackerror bezeichnet wird, zu gewinnen. Ein berechneter Wert kann jedoch aufgrund der zahlreichen Einflußfaktoren, die sowohl von der Abtasteinrichtung als auch vom Aufzeichnungsträger ausgehen, den spezifisch vorliegenden Bedingungen nicht entsprechen, so daß der G-Faktor bei jedem Gerät manuell eingestellt werden muß. Das Problem der Einstellung des G-Faktors bzw. des G-Faktor-Abgleichs tritt auch beim sogenannten Differential-Push-Pull auf. Das Differential-Push-Pull bzw. DPP ist eine Dreistrahlmethode, d.h. es werden neben einem auf der Spur positionierten Hauptstrahl zwei zwischen den Spuren vor und nach dem Hauptstrahl vorgesehene Hilfstrahlen zur Spurführung verwendet und die von den Strahlen bereitgestellten Spots wandern bei Auslenkung des Aktuators in die gleiche Richtung. Das vom Aufzeichnungsträger reflektierte Licht des Hauptstrahls und der Hilfs- bzw. Nebenstrahlen wird jeweils mit einem zweigeteilten Photodetektor detektiert und von jedem Photodetektor mit einem Differenzverstärker ein Push-Pull-Signal bereitgestellt. Dadurch, daß der Hauptstrahl auf der Mitte der Spur und die Hilfsstrahlen exakt zwischen den Spuren positioniert sind, ist das Push-Pull-Signal des Hauptstrahldetektors invers zu dem der Hilfsstrahldetektoren. Insbesondere von Aktuatorbewegungen vorgetäuschte Spurfehlersignale werden eleminiert, indem die Push-Pull-Signale der Hilfsstrahldetektoren addiert und multipliziert mit einem G-Faktor vom Push-Pull-Signal des Hauptstrahldetektors subtrahiert werden. Aufgrund der zahlreichen Einflußfaktoren, die dazu führen, daß trotz idealer Spurpositionierung ein Spurfehlersignal erzeugt wird und die Intensitätsverteilungen von Haupt- und Hilfsstrahlen unterschiedlich sein können, ist auch hier der G-Faktor manuell und bei jedem Gerät individuell einzustellen bzw. abzugleichen. Zum Einstellen des optimalen G-Faktors, der unabhängig von der Schleifenverstärkung der Spurführungsregelkreises einzustellen ist, wird ein kritischer Aufzeichnungsträger bzw. ein Aufzeichnungsträger mit Plattenschlag bzw. Exzentrizität in Form einer Meßplatte verwendet, die den Aktuator auslenkt und ein entsprechendes Push-Pull-Spurfehlersignal erzeugt. Mit einem Oszilloskop wird dann der Verlauf des Spurfehlersignals bei geöffnetem Spurregelkreis beobachtet und der G-Faktor optimal eingestellt. Hierzu wird die Einstellung eines G-Faktor-Stellers so lange verändert, bis das auf dem Oszilloskop dargestellte Spurfehlersignal in einem für die Regelung optimalen Bereich auftritt. Dadurch werden im wesentlichen auf Abweichungen des Abtaststrahls von der Spur zurückzuführende Steuersignale bereitgestellt und gerätespezifische sowie aufzeichnungsträgerspezifische Einflüsse auf das Push-Pull-Spurfehlersignal kompensiert. Dies erfolgt manuell durch reines Ausprobieren, ist daher sehr zeitaufwendig und muß für jedes Pickup bzw. Gerät aufgrund von Exemplarstreuungen individuell durchgeführt werden. Nachteilig ist weiterhin, daß sich die Geräteparameter infolge Alterung und äußerer Einflüsse verändern, so daß eine optimale G-Faktor-Einstellung nur für einen relativ geringen Zeitraum gewährleistet werden kann. Darüber hinaus bleiben von unterschiedlichen Aufzeichnungsträgern ausgehende Einflüsse auf das Spurfehlersignal unberücksichtigt.
Unabhängig vom G-Faktor, mit dem erreicht wird, daß der Regelbereich des Spurregelkreises auch dann noch ausgeschöpft werden kann, wenn der Aktuator ausgelenkt wird oder andere Einflüsse das Fehlersignal verfälschen, ist ein gegebenenfalls im Spurregelkreis vorhandener Offset, der zu einer Unsymmetrie des Regelbereiches führt, mit einem beispielsweise EP 02 74 031 B1 beschriebenen Verfahren, zu kompensieren. Das Kompensieren einer Offsetspannung im Spurregelkreis ist jedoch nur auf eine definierte Aktuatorstellung bezogen, so daß der Regelbereich trotz Offset-Kompensation bei nicht optimaler G-Faktor-Einstellung und Auslenkung des Aktuators eingeschränkt wird oder die Regelung aussetzt. Deshalb ist generell zusätzlich das Einstellen eines optimalen G-Faktors bzw. ein G-Faktor-Abgleich erforderlich. Im Gegensatz zum Einstellen der Regelverstärkung, mit der die Proportionalverstärkung im geschlossenen Regelkreis ggf. automatisiert abgeglichen wird, vgl. EP 02 64 837 B1, erfolgt die G-Faktor-Einstellung bei geöffnetem Regelkreis und ist Voraussetzung für die Wirksamkeit des Regelkreises im gesamten Regelbereich.

Es ist deshalb Aufgabe der Erfindung, ein Verfahren und eine Anordnung anzugeben, mit denen der zum Einstellen eines optimalen G-Faktors erforderliche Aufwand verringert und trotzdem sowohl gerätespezifische als auch aufzeichnungsträgerspezifische Einflüsse bei der optimalen G-Faktor-Einstellung berücksichtigt werden.

Diese Aufgabe wird durch die jeweils in den Ansprüchen 1 und 7 angegebenen Merkmale gelöst. Vorteilhafte Weiterbildungen sind in den Unteransprüchen angegeben.

Das Prinzip der Erfindung besteht darin, daß Abweichungen der G-Faktor-Einstellung von einer optimalen G-Faktor-Einstellung bei geöffnetem Spurregelkreis durch Ansteuerung der Servoeinrichtung zur Auslenkung des Aktuators aus seiner Spurlage und Auswertung des Push-Pull-Signals automatisiert ermittelt und der G-Faktor automatisiert auf einen optimalen G-Faktor eingestellt wird. Hierzu wurden zwei unterschiedliche Lösungswege gefunden, die darin bestehen, daß bei geöffnetem Spurregelkreis der Aktuator durch Ansteuerung seiner Servoeinheit ausgelenkt und zum Ermitteln der Abweichung einer aktuellen G-Faktor-Einstellung von einer optimalen G-Faktor-Einstellung entweder ein Mittelwert des Push-Pull-Signals gemessen und der optimale G-Faktor mit einem iterativen Verfahren automatisiert optimal eingestellt wird oder mit einem Synchrondetektor aus dem Push-Pull-Signal während der Auslenkung des Aktuators ein Signal gebildet wird, das zum automatisierten Einstellen eines optimalen G-Faktors geeignet ist. Diese Verfahren können sowohl im Zusammenhang mit dem bekannten Transversal-Push-Pull als auch im Zusammenhang mit dem bekannten Differential-Push-Pull angewendet werden. Das mit einem Synchrondetektor aus dem Push-Pull-Signal während der Auslenkung des Aktuators gebildete Signal zum automatisierten Einstellen eines optimalen G-Faktors ist vorzugsweise ein Integrationssignal oder ein sowohl integrale als auch proportionale Anteile enthaltendes Signal. Die Vorteile der Verwendung eines sowohl integrale als auch proportionale Anteile enthaltenden Signals bestehen darin, daß die Gefahr, daß ein angeschlossener Integrator bis in die Begrenzung fährt, gemindert und mit einem festgelegten Restfehler gearbeitet wird. Durch den Proportionalanteil wird weiterhin der Betriebszustand, bei dem kein Eingangssignal zur Verfügung steht, vorteilhaft beeinflußt.
Das auf einer Mittelwertbildung des Spurfehlersignals und Iteration beruhende Verfahren wird mit einem Mikroprozessor realisiert, wobei vorteilhaft ein generell in derartigen Geräten vorhandener Mikroprozessor genutzt werden kann. Diese Lösung erfordert einen geringen schaltungstechnischen Aufwand und weist durch die Implantation in den Prozessor eine hohe Flexibilität bezüglich der Anwendung unterschiedlicher Iterationsprinzipien auf.
Das integrative Verfahren wird von der Verwendung eines Synchrondetektors bestimmt, wobei dieser bereits unmittelbar die Richtung der Abweichung detektiert , so daß die Stellrichtung grundsätzlich nicht variiert.
Das den Verfahren gemeinsame Ziel besteht darin, daß das Push-Pull-Spurfehlersignal über den gesamten Bereich der Auslenkung des Aktuators gleichmäßig ist und nicht durch andere Störgrößen beeinflußt wird, da dies die Grundlage einer optimalen G-Faktor-Einstellung bildet. Nur bei gleichmäßigem Spurfehlersignal im Auslenkbereich des Aktuators, wobei eine Offsetkorrektur bereits vorausgesetzt wird, kann die volle Wirksamkeit des Spurregelkreises gewährleistet werden.
Wie bereits erwähnt, wird beim iterativen Verfahren der Mittelwert des Push-Pull-Signals während der Auslenkung des Aktuators gemessen und der optimale G-Faktor in einem iterativen Verfahren eingestellt . Hierzu ist an einem das Push-Pull-Spurfehlersignal bereitstellenden Ausgang vorzugsweise ein Tiefpaßfilter angeschlossen, um den Mittelwert zu bilden, und das Tiefpaßfilter ist zur Auswertung des Mittelwertes des Push-Pull-Signals bei Auslenkung des Aktuators über einen Analog-Digital-Wandler mit einem Mikroprozessor verbunden. Mit dem Mikroprozessor wird der Spurregelkeis geöffnet und ein G-Faktor-Steller G schritt- und richtungsweise so lange beeinflußt, bis der Mittelwert des Spurfehlersignals bei Auslenkung des Aktuators im mathematischen Sinn keinen Anstieg, d.h. weder eine Zunahme noch eine Abnahme, aufweist. Voraussetzung für den Abgleich ist, daß ein Aufzeichnungsträger im Gerät eingelegt ist, der im Gegensatz zum bekannten Verfahren, ein beliebiger Aufzeichnungsträger sein kann. Dadurch ist es nicht mehr notwendig spezielle, einen relativ hohen Kostenfaktor darstellende Meßplatten vorzusehen. Zur Auslenkung des Aktuators wird die Servoeinrichtung vom Mikroprozessor angesteuert. Das Verfahren kann mit extern angeordneten Mittel durchgeführt werden, wobei es jedoch aufgrund der Beeinflussung des G-Faktors auch durch den verwendeten Aufzeichnungsträger besonders vorteilhaft ist, die zum automatisierten G-Faktor-Abgleich erforderlichen Mittel im Gerät vorzusehen und eine optimale Einstellung des G-Faktors bei jedem erneuten Einlegen eines Aufzeichnungsträgers und/oder auch in Pausen während des Abspielvorgangs automatisiert vorzunehmen.
Auch das integrative Verfahren kann sowohl mit externen Mitteln als auch vorzugsweise im Gerät ohne manuellen Abgleich automatisiert realisiert werden. Zum Realisieren des integrativen Verfahrens ist an einem das Push-Pull-Spurfehlersignal bereitstellenden Ausgang über Umschalter ein Synchrondetektor angeschlossen. Der Synchrondetektor stellt ein integrale oder proportionale und integrale Anteile enthaltendes Signal zum Beeinflussen eines G-Faktor-Stellers für eine optimale Einstellung bereit. Zum Auslenken des Aktuators wird die Servoeinrichtung vom Spurregelverstärker getrennt und mit einem Oszillator verbunden, der zum Auslenken des Aktuators ein entsprechendes Steuersignal bereitstellt. Am Oszillator ist weiterhin ein Schwellwertschalter angeschlossen, mit dem Umschalter am Eingang des Synchrondetektors gesteuert werden. Dadurch wird unmittelbar die Richtung, in die der G-Faktor-Steller zur optimalen Einstellung zu beeinflussen ist, bestimmt. Das Ermitteln der Größe oder des Wertes zur optimalen Einstellung des G-Faktors erfolgt durch Integration der verbleibenden Abweichungen vom optimalen Verlauf des Spurfehlersignals bei kontinuierlicher Annäherung an die optimale G-Faktor-Einstellung mit dem Synchrondetektor. Das analoge Ausgangssignal des Synchrondetektors wird vorzugsweise digitalisiert und einer Sample and Hold Schaltung zugeführt, um eine hohe Langzeitkonstanz des ermittelten Wertes der optimalen G-Faktor-Einstellung zu gewährleisten. Nach dem Abgleich des G-Faktors wird der Spurregelkreis geschlossen und der normale Betrieb des Gerätes eingeleitet. Zur Steuerung dieses Ablaufes wird vorzugsweise ein im Gerät vorhandener Mikroprozessor verwendet.
Grundsätzlich ist zum automatisierten Ermitteln von Abweichungen der G-Faktor-Einstellung von einer optimalen G-Faktor-Einstellung die Servoeinrichtung mit einer Steuereinrichtung zur Auslenkung des Aktuators aus seiner Spurlage verbunden, eine das Push-Pull-Signal während der Auslenkung bewertende Auswerteeinheit vorgesehen und an der Auswerteeinheit eine Stelleinrichtung zum automatisierten Einstellen eines G-Faktor-Stellers auf einen optimalen G-Faktor angeschlossen. Die Steuereinrichtung zur Auslenkung des Aktuators aus seiner Spurlage wird vorzugsweise entweder von einem Mikroprozessor oder von einem Oszillator gebildet und die Auswerteeinheit ist vorzugsweise entweder ein Tiefpaßfilter mit einem über einen Analog-Digital-Wandler angeschlossenem Mikroprozessor oder ein Synchrondetektor, dem eine Sample and Hold Schaltung nachgeschaltet ist und die Anordnung zum automatisierten Ermitteln und automatisierten Einstellen eines optimalen G-Faktors ist vorzugsweise im Gerät zur Wiedergabe und/oder Aufzeichnung von Informationen angeordnet.

Mit den angegebenen Lösungen kann in vorteilhafter Weise die optimale Einstellung des G-Faktors automatisiert durchgeführt werden, so daß ein manuelles Einstellen nicht mehr erforderlich ist. Die automatisierte G-Faktor-Einstellung ist darüber hinaus im Wiedergabe- und/oder Aufzeichnungsgerät durchführbar, wodurch Einflüsse des Aufzeichnungsträgers auf den G-Faktor und Änderungen der Geräteparameter den aktuellen Bedingungen entsprechend berücksichtigt werden.

Nachfolgend wird die Erfindung anhand von Zeichnungen in Ausführungsbeispielen näher erläutert.

Es zeigen:
- Fig. 1: Spurfehlersignaldiagramme,
- Fig. 2: Prinzipskizze eines Photodetektors für Transversal-Push-Pull,
- Fig. 3: Prinzipskizze eines Photodetektors für Differential-Push-Pull,
- Fig. 4: Prinzipskizze einer Schaltungsanordnung zum iterativen G-Faktor-Abgleich,
- Fig. 5: Signalverlaufsdiagramme zur automatisierten G-Faktor-Einstellung mit einem Synchrondetektor,
- Fig. 6: Prinzipskizze einer Schaltungsanordnung zum G-Faktor-Abgleich mit einem Synchrondetektor.

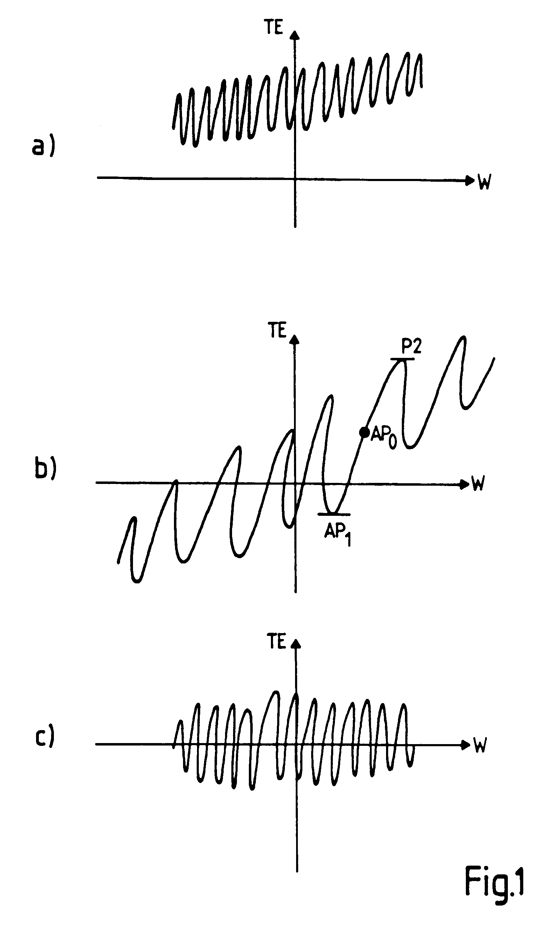

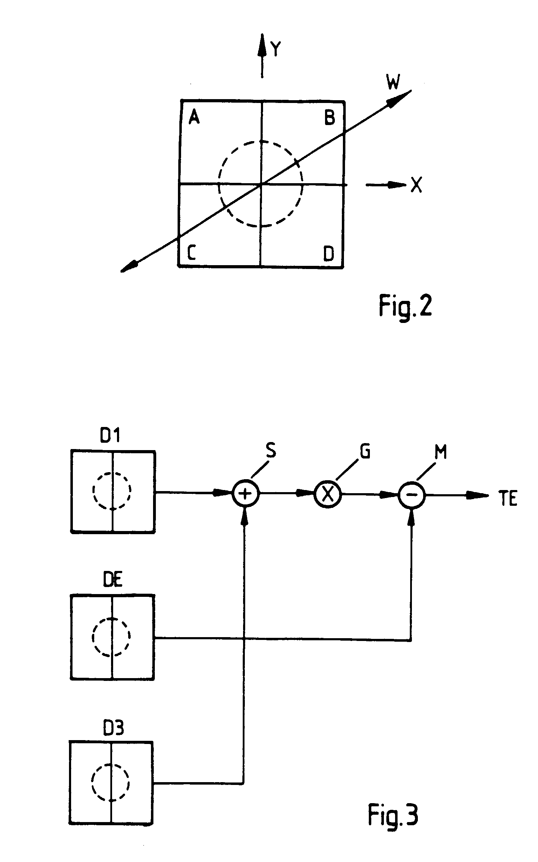

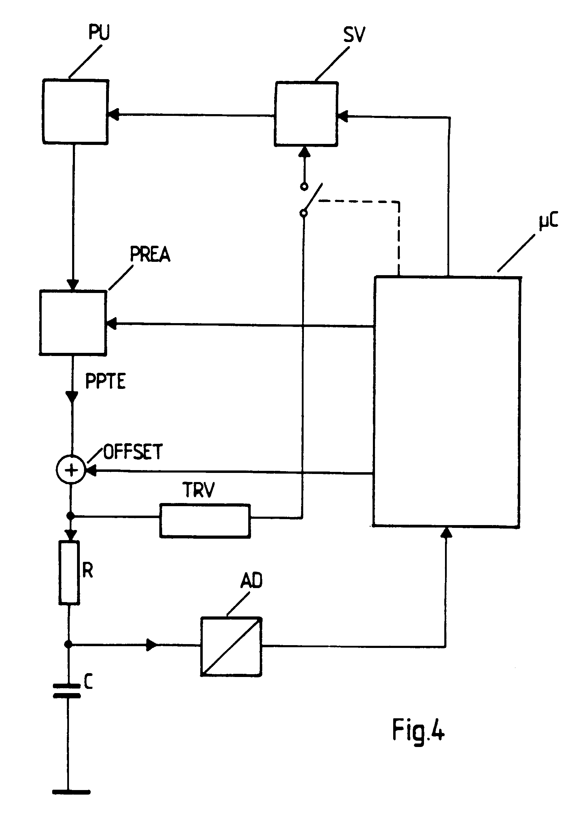

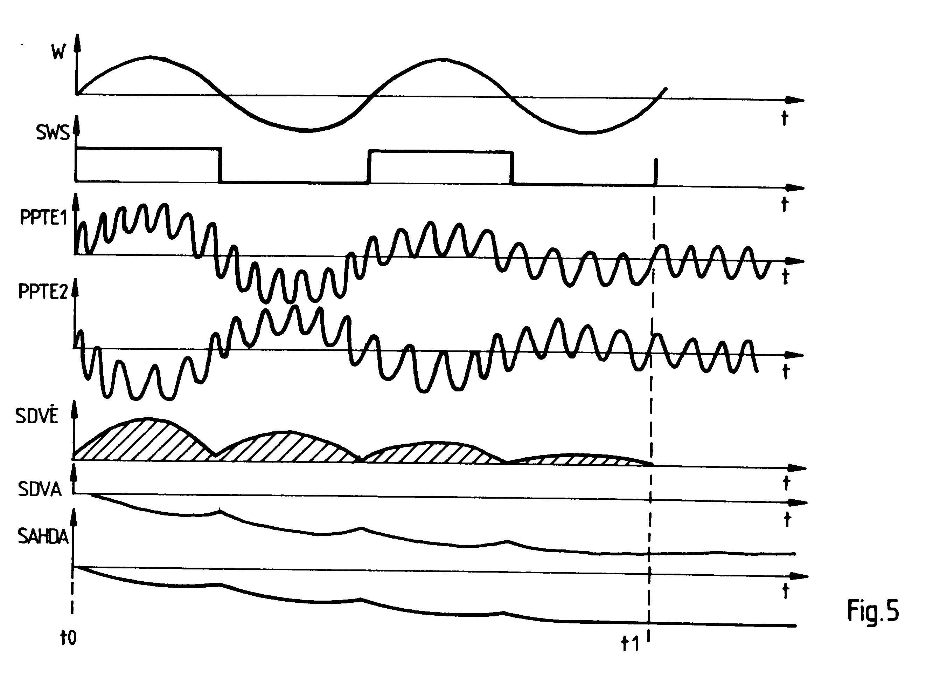

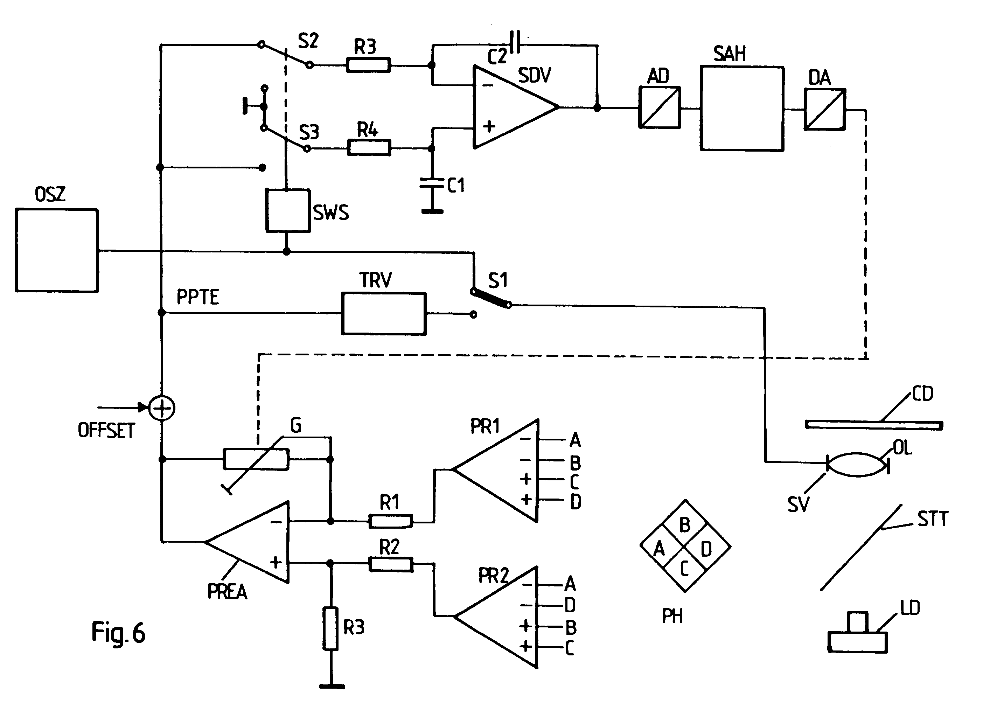

In Fig. 1 sind Spurfehlersignaldiagramme angegeben, die unterschiedliche Spurfehlersignale TE in Abhängigkeit vom Weg W der Auslenkung des Aktuators darstellen. Das in Fig.la dargestellte Spurfehlersignal TE kennzeichnet aufgrund der Unsymmetrie zur W-Achse des Diagramms sowohl einen Offset im Regelkreis als auch aufgrund des Anstiegs bzw. Abfalls bei Auslenkung des Aktuators einen nicht optimal eingestellten G-Faktor. Das bekannte korrigieren des Offsets führt zu dem in Fig.lb dargestellten Spurfehlersignaldiagramm, das trotz des Verlaufs durch den Mittelpunkt des Koordinatensystems noch nicht als optimal angesehen werden kann, da die Spurregelung Fig.lb entsprechend bei ungünstigem G-Faktor und Auslenkung des Aktuators um einen Weg W nicht in vollem Umfang wirksam ist oder sogar außer Funktion gerät. In Fig.lb sind ein Arbeitspunkt AP0 im Mittenbereich des Spurfehlersignals TE und diesem Arbeitspunkt AP0 entsprechende Grenzarbeitspunkte AP1,AP2 am Minimum bzw. Maximum des Spurfehlersignalbereiches bei Auslenkung des Aktuators um einen Weg W angegeben. Es ist ersichtlich, daß der Regelbereich der Spurfehlerregelung aufgrund des Anstiegs des Spurfehlersignals TE bei Auslenkung des Aktuators einseitig eingeschränkt ist und die Regelung bei Überschreiten eines dem Grenzarbeitspunkt AP2 entsprechenden Weges W unwirksam wird. Der G-Faktor ist generell optimal einzustellen, um die Wirksamkeit des Spurregelkeises in vollem Umfang auch bei Auslenkungen des Aktuators zu gewährleisten. Das Auslenken des Aktuators tritt sowohl aufgrund unvermeidbarer Exzentrizitäten als auch aufgrund der Unterteilung des Radialantriebes in Grob- und Feinantrieb grundsätzlich im Abspiel- und/oder Aufzeichnungsbetrieb eines optischen Aufzeichnungsträgers auf. Der G-Faktor gilt als optimal eingestellt, wenn das Spurfehlersignal TE einen Fig.lc entsprechenden Verlauf aufweist, der zur W-Achse symmetrisch und ohne einen Anstieg ist. Dies trifft sowohl für eine auf dem Transversal-Push-Pull-Verfahren als auch für eine auf dem Differential-Push-Pull-Verfahren basierende Spurregelung zu.
Beim Transversal-Push-Pull bzw. TPP ist entsprechend der in Fig.2 dargestellten Prinzipskizze ein aus vier Quadranten A,B,C,D bestehender Photodetektor derart angeordnet, daß der Weg W des Abtaststrahls nicht parallel zu einer Trennlinie der Quadranten A,B,C,D des Photodetektors verläuft. Ein Auslenken des Aktuators führt dadurch zur Veränderung der detektierten Lichtmenge in senkrecht zueinander stehenden Richtungen und ermöglicht mit einem Korrekturfaktor, dem sogenannten G-Faktor, das Abtrennen des ausschließlich auf Spurabweichungen zurückzuführenden Spurfehlersignals TE. Unter Vewendung des in Fig.2 angegebenen Koordinatensystems X,Y können die Beziehungen X = (A+D)- (B+C) und Y = (A+B)-(D+C) aufgestellt und als Spurfehlersignal TE = X - G*Y angegeben werden. Das G entspricht dabei dem Korrekturwert bzw. dem sogenannten G-Faktor, der optimal einzustellen ist.
Beim Differential-Push-Pull bzw. DPP, das mit einem Haupt- und zwei Hilfsabstaststrahlen sowie drei zweigeteilten Photodetektoren D1, D2, D3 arbeitet, werden Fig.3 entsprechend zum Erzeugen eines ausschließlich auf Spurabweichungen zurückzuführenden Spurfehlersignals TE die mit Photodetektoren D1, D3 von den Hilfsstrahlen erzeugten Signale zunächst mit einem Summierer S addiert, dann mit einem G-Faktor korrigiert und vom Ergebnis dann das vom Photodetektor des Hauptabtaststrahls detektierte Signal mit einem Subtrahierer M abgezogen.
Um den G-Faktor optimal automatisiert einstellen zu können, werden zwei Verfahren vorgeschlagen, die sowohl im Zusammenhang mit TPP als auch mit DPP angewendet werden können.
Gemeinsam ist diesen Verfahren, daß Abweichungen der G-Faktor-Einstellung von einer optimalen G-Faktor-Einstellung bei geöffnetem Spurregelkreis durch Ansteuerung der Servoeinrichtung zur Auslenkung des Aktuators aus seiner Spurlage und Auswertung des Push-Pull-Signals automatisiert ermittelt und der G-Faktor automatisiert auf einen optimalen G-Faktor eingestellt wird. Hierzu werden entweder ein Mittelwert eines Push-Pull-Signals während der Auslenkung gemessen und der G-Faktor in einem iterativen Verfahren mit einem Mikroprozessor µP bis zur Übereinstimmung von Mittelwerten bei unterschiedlicher Auslenkung eingestellt oder mit einem vorgegebenen Oszillatorsignal der Aktuator aus seiner Spurlage ausgelenkt und der G-Faktor mit einem, von einem Synchrondetektor aus einem Push-Pull-Signal während der Auslenkung gebildeten Signal ermittelt und eingestellt.
Grundlage der automatisierten G-Faktor-Einstellung bilden somit ein iteratives und/oder ein überwiegend integratives Verfahren, wobei beim integrativen Verfahren vorzugsweise Proportionalanteile eingeschlossen sein sollen. Beide Verfahren zur G-Faktor-Einstellung gehen zur optimalen Wirkungsweise des Spurregelkreises davon aus, daß zusätzlich zur G-Faktor-Einstellung in bekannter Weise eine Korrektur des Offset in der Regelstrecke vorgesehen ist. Um einen optimalen G-Faktor-Abgleich unabhängig von äußeren Einflüssen und unter Berücksichtigung vom Aufzeichnungsträger ausgehender Einflüsse zu ermöglichen, wird der automatisierte G-Faktor-Abgleich vorzugsweise im Gerät nach dem Einlegen eines Aufzeichnungsträgers in das Gerät zur Wiedergabe und/oder Aufzeichnung von Informationen und/oder während Pausen der Informationswiedergabe durchgeführt.
Das bei Auslenkung des Aktuators detektierte Push-Pull- bzw. Spurfehlersignal wird zur G-Faktor-Einstellung Fig.4 und Fig.6 entsprechend einem G-Faktor-Steller G zugeführt, der vorzugsweise von einem Verstärker PREA gebildet wird, der in mindestens einem Rückkopplungszweig zum Einstellen des G-Faktors vorzugsweise einen in seinem Wert elektrisch veränderbaren Widerstand aufweist. Am Ausgang des G-Faktor-Stellers bzw. des Verstärkers PREA steht dann vor oder nach einer Offsetkorrektur OFFSET ein Push-Pull-Spurfehlersignal PPTE zur Verfügung, das bei geöffnetem Spurregelkreis den Ausgangspunkt der Verfahren zur automatisierten G-Faktor-Einstellung bildet.
Beim iterativen Verfahren wird das Push-Pull-Spurfehlersignal PPTE Fig. 4 entsprechend zur Mittelwertbildung einem Tiefpaßfilter zugeführt, das von einem Widerstand R und einem Kondensator C gebildet wird. Das tiefpaßgefilterte Push-Pull-Spurfehlersignal PPTE wird am Verbindungspunkt zwischen dem Widerstand R und dem Kondensator C abgegriffen und über einen Analog-Digital-Wandler AD einem Mikroprozessor µP zugeführt. Als Mikroprozessor µP wird vorzugsweise ein generell in einem optischen Wiedergabe- und/oder Aufzeichnungsgerät vorhandener Mikroprozessor verwendet. Zum G-Faktor-Abgleich werden zunächst der Spurregelkreis des Gerätes nach dem Einlegen eines Aufzeichnungsträgers und/oder auch während einer Wiedergabepause mit dem Mikroprozessor µP geöffnet und der Aktuator aus seiner Ruhe- bzw. Neutrallage ausgelenkt. Hierzu werden Fig.4 entsprechend die Verbindung zwischen dem Spurregelverstärkers TRV und der Servoeinrichtung SV des Gerätes mit dem Mikroprozessor µP aufgetrennt und der Servoeinrichtung SV vom Mikroprozessor µP ein Steuersignal zur Auslenkung des Aktuators bzw. Pickups PU zugeführt. Das mit dem Photodetektor des Pickups PU detektierte Push-Pull-Signal wird dann analog zum normalen Betrieb des Gerätes dem Verstärker PREA zugeführt, der in nicht dargestellter Weise einen G-Faktor-Steller enthält. Das der Auslenkung des Aktuators um einen Weg W entsprechende Push-Pull-Spurfehlersignal PPTE wird dann wiederum nach der Mittelwertbildung mit dem Mikroprozessor µP ausgewertet. Diese Auswertung mit dem Mikroprozessor µP beinhaltet insbesondere eine Untersuchung ob der Verlauf des Spurfehlersignals TE einen Anstieg bzw. Abfall aufweist. Ist dies zutreffend, wird der aktuelle Wert der G-Faktor-Einstellung mit dem Mikroprozessor µP verändert und erneut der Verlauf des Spurfehlersignals TE hinsichtlich einer Abweichung von einer optimalen Einstellung des G-Faktors analysiert. Dieser Vorgang wird dann in einem iterativen Verfahren bis zur optimalen Einstellung des G-Faktors automatisiert wiederholt. Durch die Automatisierung des Abgleichs kann der Abgleich in vorteilhafter Weise innerhalb des Gerätes ohne das Anschließen externer Meßeinrichtungen und ohne manuellen Aufwand zum Abgleich durchgeführt werden. Nach der optimalen Einstellung des G-Faktors werden dann die Verbindung zwischen dem Spurregelverstäker TRV, dem jetzt ein optimales Spurfehlersignal TE zur Regelung zugeführt wird, und der Servoeinrichtung SV mit dem Mikroprozessor µP wieder hergestellt und eine optimale Arbeitsweise des Gerätes gewährleistet. Die anhand dieser Funktion beschriebene Schaltungsanordnung zur Durchführung des Verfahrens gemäß Fig.4 weist als zusätzliches Merkmal gegenüber bekannten Schaltungsanordnungen vergleichbarer Geräte im Wesentlichen lediglich einen Widerstand R und einen Kondensator C zur Mittelwertbildung des Spurfehlersignals TE bzw. Push-Pull-Spurfehlersignal PPTE mit einem Tiefpaßfilter auf, so daß der Aufwand zum Realisieren des Verfahrens und der Schaltungsanordnung sehr gering ist.
Das überwiegend integrative Verfahren wird anhand der Figuren 5 und 6 erläutert. Das in Fig.6 angegebene Prinzipschaltbid zur Durchführung des überwiegend integrativen Verfahrens enthält einen Informationsträger CD , der mit dem Abtaststrahl einer Laserdiode LD abgetastet wird, wobei das Licht der Laserdiode LD einen Strahlteiler STT und eine Objektivlinse OL zur Fokussierung des Abtaststrahls auf dem Informationsträger CD und zum Detektieren mit einem Photodetektor PH, der vier Quadranten A,B,C,D enthält, passiert. Anhand des Vierquadrantendetektors ist ersichtlich, daß dieses Ausführungsbeispiel für das Transversal-Push-Pull konzipiert wurde. Es sei deshalb nochmals darauf hingewiesen, daß die Anwendung im Zusammenhang mit dem Differential-Push-Pull äquivalent möglich ist. Die mit den Quadranten A,B,C,D des Photodetektors PH detektierten Lichtintensitätssignale werden den Ausführungen zum TPP entsprechend einem ersten und einem zweiten Vorverstärker PR1, PR2 zugeführt, deren Ausgänge über jeweils einen Widerstand R1, R2 mit einem Eingang eines Verstärkers PREA verbunden sind. Der nichtinvertierende Eingang des Verstärkers PREA ist über einen dritten Widerstand R3 nach Masse geführt und der invertierende Eingang ist über einen vorzugsweise mit einem elektrischen Signal einstellbaren Widerstand mit dem Ausgang des Verstärkers PREA verbunden. Der derart beschaltete Verstärker PREA bildet den eigentlichen G-Faktor-Steller G und an seinem Ausgang ist ein Addierer OFFSET zur bekannten Korrektur eines Offsets im Regelkreis vorgesehen, so daß nach dem Addierer OFFSET ein Push-Pull-Spurfehlersignal PPTE zur Verfügung steht, das hinsichtlich des G-Faktors optimal einzustellen ist, um als Regelgröße für einen angeschlossenen Spurregelverstärker TRV verwendet werden zu können. Zur G-Faktor-Einstellung wird zunächst der Spurregelkreisverstärker TRV von der Servoeinrichtung SV, die zur Auslenkung der Objektivlinse OL vorgesehen ist, mit einem Schalter S1 abgetrennt und die Servoeinrichtung SV mit einem Oszillator OSZ verbunden. Das Umschaltsignal wird dabei von einem im Gerät vorhandenen Mikroprozessor bereitgestellt, der nicht dargestellt ist, und der Oszillator OSZ stellt zum Auslenken des Aktuators bzw. der Objektivlinse OL vorzugsweise ein sinusförmiges Steuersignal bereit. Mit dem Steuersignal werden der Aktuator bzw. die Objektivlinse OL um einen in Fig.5 dargestellten Weg W ausgelenkt und am Oszillator OSZ ist Fig.6 entsprechend ein Schwellwertschalter SWS angeschlossen, mit dem zur Ansteuerung zweier Umschalter S2, S3 ein in Fig.5 dargestelltes Rechtecksignal SWS gebildet wird. Mit den Umschaltern S2, S3 wird wechselweise an den Eingängen eines Differenzverstärkers über einen Widerstand R3 bzw. einen Widerstand R4 das Push-Pull-Spurfehlersignal PPTE oder Massepotential angelegt und der nichtinvertierende Eingang des Differenzverstärkers ist über einen ersten Kondensator C1 mit einem Masseanschluß verbunden, während sein nichtinvertierender Eingang über einen zweiten Kondensator C2 mit dem Ausgang des Differenzverstärkers verbunden ist. Die Umschalter S2, S3 bilden mit dem beschalteten Differenzverstärker einen sogenannten Synchrondetektor SDV, mit dem das in Fig. 5 dargestellte Synchrondetektorausgangssignal SDVA eines Push-Pull-Spurfehlersignals PPTE1 bzw. PPTE2 entsprechend der Ausgangsstellung des G-Faktor-Stellers G gebildet wird. Da am Eingang des Synchrondetektors SDV im Zusammenhang mit der Umschaltung durch das um den Weg W auslenkende Signal des Oszillators OSZ die Richtung bestimmt ist, in der der G-Faktor-Steller G zur optimalen Einstellung zu steuern ist, können unmittelbar Abweichungen des Push-Pull-Spurfehlersignals PPTE1 bzw. PPTE2 von einem optimalen Verlauf als Einstellkriterium verwendet werden. Der Synchrondetektor SDV ist vorzugsweise ein Differenzsynchronintegrator bzw. Synchrondemodulator, mit dem infolge der Kenntnis der Auslenkrichtung der Objektivlinse OL in vorteilhafter Weise unmittelbar die Richtung bestimmt wird, d.h. abnehmend oder zunehmend, in die der G-Faktor zur optimalen Einstellung zu beeinflussen ist. Eine Iteration ist nicht erforderlich. Da die Frequenz, mit der die Objektivlinse OL ausgelenkt wird, aufgrund der Ansteuerung durch den Oszillator OSZ bekannt ist, ist die Richtung, in die der G-Faktor-Steller G zu steuern ist, unmittelbar bestimmt, denn es ist davon auszugehen, daß der G-Faktor bzw. die Verstärkung des Verstärkers PREA zu groß ist, wenn sich das Oszillatorsignal und das Synchrondemodulatorsignal in Phase befinden und andererseits der G-Faktor bzw. die Verstärkung des Verstärkers PREA zu gering ist, wenn sich Oszillatorsignal und Synchrondemodulatorsignal in Gegenphase befinden. Die Oszillatorfrequenz ist vorzugsweise eine Frequenz unterhalb der mechanischen Eigen-Resonanzfrequenz des Aktuators. Gemäß Fig.5 ist am Eingang des Synchrondetektors SDV ein der Abweichung entsprechendes Synchrondetektoreingangssignal SDVE wirksam und zum automatisierten Einstellen des G-Faktors ist am Ausgang des Synchrondetektors SDV vorzugsweise über einen Analog-Digital-Wandler AD eine Sample and Hold Schaltung SAH zum Ansteuern des G-Faktor-Stellers G angeschossen. Mit der Sample and Hold Schaltung SAH werden in bekannter Weise jeweils die aktuellen Werte zum Stellen des G-Faktor-Stellers G übernommen und schließlich der optimale Einstellwert beibehalten. Diese Steuerung sowie die Umschaltung in den Regelbetrieb werden vorzugsweise mit dem bereits erwähnten Mikroprozessor durchgeführt. Um eine hohe Langzeitkonstanz des automatisiert ermittelten Einstellwertes für den optimalen G-Faktor-Abgleich zu gewährleisten, wurde vorzugsweise eine digitale Sample and Hold Schaltung SAH vorgesehen obwohl grundsätzlich auch eine analog arbeitende Sample and Hold Schaltung SAH verwendet werden könnte. Weiterhin wurde das Ausführungsbeispiel anhand eines im wesentlichen integrale Signalanteile bereitstellenden Synchrondetektors SDV beschrieben, obwohl die Verwendung eines auch proportionale Signalanteile bereitstellenden Synchrondetektors SDV insbesondere im Zusammenhang mit dem Abgleichverhalten bei geringen Abweichungen von der optimalen Einstellung zu bevorzugen ist. Die Vorteile der Verwendung eines sowohl integrale als auch proportionale Anteile enthaltenden Signals bestehen darin, daß die Gefahr, daß ein angeschlossener Integrator bis in die Begrenzung fährt, gemindert und mit einem festgelegten Restfehler gearbeitet wird. Durch den Proportionalanteil wird weiterhin der Betriebszustand, bei dem kein Eingangssignal zur Verfügung steht, vorteilhaft beeinflußt.
Das Ausführungsbeispiel wurde insbesondere unter dem Aspekt der Erläuterung des Prinzips ausgewählt, wodurch der Anwendungsbereich im Zusammenhang mit anderen Synchrondetektoren SDV nicht eingeschränkt wird.

## Patentansprüche

1. Verfahren zum Abgleich einer als G-Faktor bezeichneten Verstärkung, die eine Steigung eines Spurfehlersignals beeinflußt, welche in Abhängigkeit von der Auslenkung einer Abtasteinrichtung auftritt, da sich das Spurfehlersignal aus einem von der Lage des Aktuators zur Spur abhängigen Anteil und einem von der Auslenkung des Aktuators aus seiner Neutrallage abhängigen Fehleranteil, der mit dem G-Faktor zu korrigieren ist, zusammensetzt, **dadurch gekennzeichnet, daß** Abweichungen der G-Faktor-Einstellung von einer optimalen G-Faktor-Einstellung bei geöffnetem Spurregelkreis durch Ansteuerung der Servoeinrichtung (SV) zur Auslenkung des Aktuators aus seiner Neutrallage und Auswertung des vom G-Faktor beeinflußten Spurfehlersignals (PPTE) automatisiert ermittelt und der G-Faktor automatisiert auf einen optimalen G-Faktor eingestellt wird.

2. Verfahren nach Anspruch 1, **dadurch gekennzeichnet, daß** zum automatisierten Ermitteln einer optimalen G-Faktor-Einstellung mit einem Mikroprozessor (µP) bei geöffnetem Spurregelkreis der Aktuator durch Ansteuerung seiner Servoeinrichtung (SV) aus seiner Neutrallage ausgelenkt, ein Mittelwert eines zusammengesetzten Spurfehlersignals (PPTE) während der Auslenkung gemessen und der G-Faktor in einem iterativen Verfahren mit dem Mikroprozessor (µP) bis zur Übereinstimmung von Mittelwerten des vom G-Faktor beeinflußten Spurfehlersignals (PPTE) bei unterschiedlicher Auslenkung des Aktuators eingestellt wird.

3. Verfahren nach Anspruch 1, **dadurch gekennzeichnet, daß** zum automatisierten Ermitteln einer optimalen G-Faktor-Einstellung mit einem Mikroprozessor bei geöffnetem Spurregelkreis der Aktuator durch Ansteuerung seiner Servoeinrichtung mit einem vorgegebenen Oszillatorsignal aus seiner Neutrallage ausgelenkt und der G-Faktor mit einem, von einem Synchrondetektor aus einem vom G-Faktor beeinflußten Spurfehlersignal während der Auslenkung gebildeten Signal ermittelt und optimal eingestellt wird.

4. Verfahren nach Anspruch 3, **dadurch gekennzeichnet, daß** das mit einem Synchrondetektor aus einem vom G-Faktor beeinflußten Spurfehlersignal während der Auslenkung des Aktuators gebildete Signal ein Integrationssignal ist.

5. Verfahren nach Anspruch 3, **dadurch gekennzeichnet, daß** ein sowohl integrale als auch proportionale Anteile enthaltendes Signal als mit einem Synchrondetektor aus einem vom G-Faktor beeinflußten Spurfehlersignal während der Auslenkung gebildetes Signal verwendet wird.

6. Verfahren nach einem der Ansprüche 1 bis 5, **dadurch gekennzeichnet, daß** Abweichungen der G-Faktor-Einstellung von einer optimalen G-Faktor-Einstellung nach dem Einlegen eines Aufzeichnungsträgers in ein Gerät zur Wiedergabe und/oder Aufzeichnung von Informationen und/oder während Pausen der Informationswiedergabe automatisiert ermittelt und der G-Faktor automatisiert optimal eingestellt wird.

7. Anordnung zum Abgleich einer als G-Faktor bezeichneten Verstärkung, die eine Steigung eines Spurfehlersignals beeinflußt, welche in Abhängigkeit von der Auslenkung einer Abtasteinrichtung auftritt, da sich das Spurfehlersignal aus einem von der Lage des Aktuators zur Spur abhängigen Anteil und einem von der Auslenkung des Aktuators aus seiner Neutrallage abhängigen Fehleranteil, der mit dem G-Faktor zu korrigieren ist, zusammensetzt, **dadurch gekennzeichnet, daß** zum automatisierten Ermitteln von Abweichungen der G-Faktor-Einstellung von einer optimalen G-Faktor-Einstellung die Servoeinrichtung mit einer Steuereinrichtung zur Auslenkung des Aktuators aus seiner Neutrallage verbunden ist, eine das vom G-Faktor beeinflußte Spurfehlersignal während der Auslenkung bewertende Auswerteeinheit vorgesehen ist und an der Auswerteeinheit eine Stelleinrichtung zum automatisierten Einstellen eines G-Faktor-Stellers (G) auf einen optimalen G-Faktor angeschlossen ist.

8. Anordnung nach Anspruch 7, **dadurch gekennzeichnet, daß** die Steuereinrichtung zur Auslenkung des Aktuators aus seiner Neutrallage ein Mikroprozessor (µP) ist, der mit einem Tiefpaßfilter (R,C) und einem Analog-Digital-Wandler (AD) eine das zusammengesetzte Spurfehlersignal während der Auslenkung bewertende Auswerteeinheit bildet und mit einem das vom G-Faktor beeinflußte Spurfehlersignal (PPTE) bereitstellenden Vorverstärker (PREA) zum automatisierten Einstellen eines G-Faktor-Stellers (G) auf einen optimalen G-Faktor verbunden ist.

9. Anordnung nach Anspruch 7, **dadurch gekennzeichnet, daß** die Steuereinrichtung zur Auslenkung des Aktuators aus seiner Neutrallage ein Oszillator (OSZ), die das vom G-Faktor beeinflußte Spurfehlersignal während der Auslenkung bewertende Auswerteeinheit ein Synchrondetektor (SDV) und die Stelleinrichtung zum automatisierten Einstellen eines G-Faktor-Stellers (G) auf einen optimalen G-Faktor eine Sample and Hold Schaltung (SAH) ist.

10. Anordnung nach einem der Ansprüche 7 bis 9, **dadurch gekennzeichnet, daß** die Anordnung zum automatisierten Ermitteln und automatisierten Einstellen eines optimalen G-Faktors im Gerät zur Wiedergabe und/oder Aufzeichnung von Informationen angeordnet ist.

## Claims

1. Method of adjusting an amplification referred to as the G-factor which is effective upon the slope of a tracking error signal that occurs in dependence on the displacement of a scanning device, where the tracking error signal is composed of a component that is dependent on the position of the actuator relative to the track and of an error component that is dependent on the displacement of the actuator from its neutral position, said error component being the one that is to be corrected by the G-factor, characterised in that, deviations of the G-factor setting from an optimum G-factor setting are determined in an automated manner with an open tracking control loop by controlling the servo device (SV) used for displacing the actuator from its neutral position and evaluating the tracking error signal (PPTE) that is affected by the G-factor, and the G-factor is then set to an optimum G-factor in an automated manner.

2. Method in accordance with Claim 1, characterised in that, for the purposes of determining an optimum G-factor setting in an automated manner using a microprocessor (µP) in the case of an open tracking control loop, the actuator is displaced from its neutral position by controlling its servo device (SV), an average value of a composite tracking error signal (PPTE) is measured during the displacement process and the G-factor is set using an iterative process by means of the microprocessor (µP) until the average values of the tracking error signal (PPTE) that is affected by the G-factor coincide for differing displacements of the actuator.

3. Method in accordance with Claim 1, characterised in that, for the purposes of determining an optimum G-factor setting in an automated manner using a microprocessor in the case of an open tracking control loop, the actuator is displaced from its neutral position by controlling its servo device by means of a predetermined oscillator signal, and the G-factor is determined and optimally set by means of a signal formed by a synchronous detector during the displacement process from a tracking error signal that is affected by the G-factor.

4. Method in accordance with Claim 3, characterised in that, the signal formed by a synchronous detector during the displacement of the actuator from a tracking error signal that is affected by the G-factor is an integration signal.

5. Method in accordance with Claim 3, characterised in that, a signal containing both integral and proportional components is used as the signal formed by a synchronous detector during the displacement process from a tracking error signal that is affected by the G-factor.

6. Method in accordance with any of the Claims 1 to 5, characterised in that, deviations of the G-factor setting from an optimum G-factor setting are determined in an automated manner and the G-factor is then optimally set in an automated manner after a recording medium has been inserted in an apparatus for the reproduction and/or recording of information and/or during pauses in the reproduction of the information.

7. Arrangement for adjusting an amplification referred to as the G-factor which is effective upon the slope of a tracking error signal that occurs in dependence on the displacement of a scanning device, where the tracking error signal is composed of a component that is dependent on the position of the actuator relative to the track and of an error component that is dependent on the displacement of the actuator from its neutral position, said error component being the one that is to be corrected by the G-factor, characterised in that, for the purposes of determining deviations of the G-factor setting from an optimum G-factor setting in an automated manner, the servo device is connected to a control device for displacing the actuator out of its neutral position, an evaluating unit is provided for evaluating the tracking error signal that is affected by the G-factor during the displacement process and an adjusting device is connected to the evaluating unit for setting a G-factor regulating unit (G) to an optimum G-factor in an automated manner.

8. Arrangement in accordance with Claim 7, characterised in that, the control device for displacing the actuator out of its neutral position is a microprocessor (µP) which, together with a low pass filter (R, C) and an analog-digital converter (AD), forms an evaluating unit for evaluating the composite tracking error signal during the displacement process and is connected to a pre-amplifier (PREA) that is providing the tracking error signal (PPTE) which is affected by the G-factor for the purposes of setting a G-factor regulating unit (G) to an optimum G-factor in an automated manner.

9. Arrangement in accordance with Claim 7, characterised in that, the control device for displacing the actuator from its neutral position is an oscillator (OSZ), the evaluating unit for evaluating the tracking error signal which is affected by the G-factor during the displacement process is a synchronous detector (SDV) and the adjusting device for setting a G-factor regulating unit (G) to an optimum G-factor in an automated manner is a sample and hold circuit (SAH).

10. Arrangement in accordance with any of the Claims 7 to 9, characterised in that, the arrangement for the automated determination and automated setting of an optimum G-factor is disposed in the apparatus for the reproduction and/or recording of information.

## Revendications

1. Procédé pour l'égalisation d'une amplification décrite en tant que facteur G, qui influence une pente ascendante d'un signal d'erreur de piste, pente qui intervient en corrélation avec la déviation d'un dispositif de balayage, puisque le signal d'erreur de piste se compose d'une partie dépendant de la position de l'actionneur par rapport à la piste et d'une partie d'erreur qui doit être corrigée par le facteur G et dépend de la déviation de l'actionneur par rapport à sa position neutre, **caractérisé en ce que** les écarts du réglage du facteur G par rapport à un réglage optimal du facteur G lorsque la boucle de régulation est ouverte, par excitation du servomécanisme (SV) pour la déviation de l'actionneur hors de sa position neutre et l'évaluation du signal d'erreur de piste (PPTE) influencé par le facteur G sont détectés de manière automatisée, et que le facteur G est réglé de manière automatisée sur un facteur G optimal.

2. Procédé selon la revendication 1, **caractérisé en ce que** pour la détection automatisée d'un réglage optimal du facteur G avec un microprocesseur (µP) lorsque la boucle de régulation de piste est ouverte, l'actionneur est dévié de sa position neutre par excitation de son servomécanisme (SV), une valeur moyenne d'un signal d'erreur de piste composé (PPTE) est mesurée pendant la déviation, et le facteur G est réglé au cours d'un procédé itératif avec le microprocesseur (µP) jusqu'à la concordance des valeurs moyennes du signal d'erreur de piste (PPTE) influencé par le facteur G pour différentes déviations de l'actionneur.

3. Procédé d'après la revendication 1, **caractérisé en ce que** pour la détermination automatisée d'un réglage optimal du facteur G avec un microprocesseur, lorsque la boucle de régulation de piste est ouverte, l'actionneur est dévié de sa position neutre par excitation de son servomécanisme au moyen d'un signal d'oscillateur donné, et le facteur G, au moyen d'un signal formé pendant la déviation par un détecteur synchrone à partir d'un signal d'erreur de piste influencé par le facteur G, est déterminé et réglé de manière optimale.

4. Procédé d'après la revendication 3, **caractérisé en ce que**, le signal formé au moyen d'un détecteur synchrone à partir d'un signal d'erreur de piste influencé par le facteur G pendant la déviation de l'actionneur, est un signal d'intégration.

5. Procédé d'après la revendication 3, **caractérisé en ce que** un signal comprenant aussi bien des parties intégrales que proportionnelles est utilisé comme signal formé au moyen d'un détecteur synchrone à partir d'un signal d'erreur de piste influencé par le facteur G pendant la déviation de l'actionneur.

6. Procédé d'après une des revendications 1 à 5, **caractérisé en ce que** les écarts de réglage du facteur G par rapport à un réglage optimal du facteur G sont détectés de façon automatisée après la mise en place d'un support d'enregistrement dans un appareil de lecture et / ou d'enregistrement d'informations, et / ou pendant les pauses dans la lecture des informations, et le facteur G est réglé sur une valeur optimale de manière automatisée.

7. Configuration pour l'égalisation d'une amplification décrite en tant que facteur G, qui influence une pente ascendante d'un signal d'erreur de piste, pente qui intervient en corrélation avec la déviation d'un dispositif de balayage, puisque le signal d'erreur de piste se compose d'une partie dépendant de la position de l'actionneur par rapport à la piste et d'une partie d'erreur, qui doit être corrigée par le facteur G et dépend de la déviation de l'actionneur par rapport à sa position neutre,
**caractérisée en ce que** pour la détection automatisée des écarts de réglage du facteur G par rapport à un réglage optimal du facteur G, le servomécanisme est relié à un mécanisme de commande pour la déviation de l'actionneur en dehors de sa position neutre, une unité d'évaluation est prévue évaluant pendant la déviation le signal d'erreur de piste influencé par le facteur G, et un dispositif de réglage est relié à l'unité d'évaluation pour le réglage automatisé d'un positionneur de facteur G (G) sur un facteur G optimal.

8. Configuration d'après la revendication 7, **caractérisée en ce que** le dispositif de commande pour la déviation de l'actionneur en dehors de sa position neutre est un microprocesseur (µP), qui forme avec un filtre passe-bas (R, C) et un convertisseur analogique-numérique (AD) une unité d'évaluation évaluant pendant la déviation le signal d'erreur de piste composé, et est relié avec un préamplificateur (PREA) produisant le signal d'erreur de piste influencé par le facteur G, pour le réglage automatisé d'un positionneur de facteur G (G) sur un facteur G optimal.

9. Configuration d'après la revendication 7, **caractérisée en ce que** le dispositif de commande pour la déviation de l'actionneur hors de sa position neutre est un oscillateur (OSZ), l'unité d'évaluation évaluant pendant la déviation le signal d'erreur de piste influencé par le facteur G est un détecteur synchrone (SDV), et le dispositif de réglage pour le réglage automatisé d'un positionneur de facteur G (G) sur un facteur G optimal est un circuit d'échantillonnage et de maintien (SAH).

10. Configuration d'après une des revendications 7 à 9, **caractérisée en ce que** la configuration pour la détection automatisée et le réglage automatisé d'un facteur G optimal est organisée dans l'appareil de lecture et / ou d'enregistrement d'informations.
